# EUROPEAN PATENT SPECIFICATION

(11) **EP 3 905 072 B1**
(45) Date of publication and mention of the grant of the patent: **25.03.2026**
(21) Application number: 19897869.4
(22) Date of filing: 12.12.2019
(51) Int. Cl.: G06F 16/2455, G06F 16/23

(54) **DATABASE COMPONENT MERGE INTO FUNCTION COMPATIBILITY METHOD, DEVICE AND STORAGE MEDIUM**
VERFAHREN ZUM ZUSAMMENFÜHREN VON DATENBANKKOMPONENTEN IN FUNKTIONSKOMPATIBILITÄT, VORRICHTUNG UND SPEICHERMEDIUM
PROCÉDÉ DE COMPATIBILITÉ DE FONCTION DE FUSION DE COMPOSANTS DE BASE DE DONNÉES, DISPOSITIF ET SUPPORT DE STOCKAGE

(30) Priority: 17.12.2018 CN 201811545283
(43) Date of publication of application: 03.11.2021
(73) Proprietor: ZTE Corporation, Shenzhen, Guangdong 518057 (CN)
(72) Inventor: FANG, Pei, Shenzhen, Guangdong 518057 (CN); DING, Yan, Shenzhen, Guangdong 518057 (CN); BAO, Yan, Shenzhen, Guangdong 518057 (CN)
(74) Representative: Canzler & Bergmeier Patentanwälte Partnerschaft mbB
(86) International application number: PCT/CN2019/124819
(87) International publication number: WO 2020/125537

(56) References cited:
- CN-A- 101 197 876
- CN-A- 105 320 681
- CN-A- 106 547 811
- CN-A- 106 682 002
- US-A1- 2012 215 804
- ANONYMOUS: "Oracle MERGE", 22 November 2018 (2018-11-22), XP055967248, Retrieved from the Internet <URL:http://web.archive.org/web/20181122080237/https://www.oracletutorial.com/oracle-basics/oracle-merge/> [retrieved on 20221003]
- ANONYMOUS: "How to avoid using Merge query when upserting multiple data using xml parameter?", 24 March 2017 (2017-03-24), XP093166569, Retrieved from the Internet <URL:https://web.archive.org/web/20170324175603/http://dba.stackexchange.com/questions/89506/how-to-avoid-using-merge-query-when-upserting-multiple-data-using-xml-parameter> [retrieved on 20240524]

## Description

### TECHNICAL FIELD

The present disclosure relates to the field of computer technology.

### BACKGROUND

Merge into is a syntax supported by some databases such as Oracle and IBM DB2. However, there are still many databases and SQL components that do not support this syntax. In a nutshell, the meaning of Merge into is "update if there is one, insert if there is no".

The principle of Merge into is that: results searched out from a USING sentence are matched with an ON condition one by one; if a result matches the ON condition, an updating operation or another operation is performed; and if none of the results matches the ON condition, an inserting operation or another operation is performed. In a Merge-into sentence with both insert and update syntaxes, the number of records of inserting and updating operations is identical to the number of records in a source table in the USING sentence. The source table may be a table has a different table structure from that of a target table, may be a temporary table with a same table structure as that of the target table, or may be data created by developers.

In the big data scenario, most database components do not support a Merge-into function, such as HAWQ, Impala, etc. With the increasing popularity of big data application scenarios, it is becoming more and more important for database components that originally did not support the Merge-into function to support the Merge-into function.

Relevant prior art disclosed in this technical field are "Oracle MERGE", 22 November 2018, retrieved from the Internet: URL http://web.archive.org/web/20181122080237/https://www.oracletutorial.com/oracle-basics/oracle-merge/ and "How to avoid using Merge query when upserting multiple data using xml parameter?", 24 March 2017, retrieved from the Internet: URL:https://web.archive.org/web/20170324175603/https://dba.stackexchange.com/ questions/89506/how-to-avoid-using-merge-query-when-upserting-multiple-data-usi ng-xml-parameter.

### SUMMARY

The invention is set out in the appended set of claims.

### BRIEF DESCRIPTION OF THE DRAWINGS

The drawings described herein are used to provide a further understanding of the present disclosure, and constitute a part of this application. An illustrative embodiment of the present disclosure and its description is intended to explain the present disclosure, but not to constitute an improper limitation to the present disclosure.
Fig. 1 is a flowchart of a method for enabling a database component to be compatible with a Merge-into function.
Fig. 2 is another flowchart of a method for enabling a database component to be compatible with a Merge-into function.
Fig. 3 is a Venn diagram of Merge-into function conversion.
Fig. 4 is a schematic structural diagram of a device for enabling a database component to be compatible with a Merge-into function.

### DETAILED DESCRIPTION

In order to make the purposes, technical solutions, and advantages of the present disclosure clearer, the present disclosure will be further described in detail below with reference to the accompanying drawings and a specific embodiment.

The purpose of the present disclosure is at least to provide a method, device and storage medium for a database component to be compatible with a Merge-into function, so as to solve the problem that the database component does not support the Merge-into function.

The embodiment of the present disclosure provides a method for enabling a database component to be compatible with a Merge-into function. According to the embodiment provided by the present disclosure, the database component does not support the Merge-into function, and the database component may be a structured query language (SQL) database component, for example, a MySQL (which is a relational database management system), a PostgreSQL, a GreenPlum, a light database (SQLite), etc. The method for enabling a database component to be compatible with a Merge-into function provided by the embodiment of the present disclosure can be implemented by a procedural language in SQL; and of course, it can also be implemented by other languages.

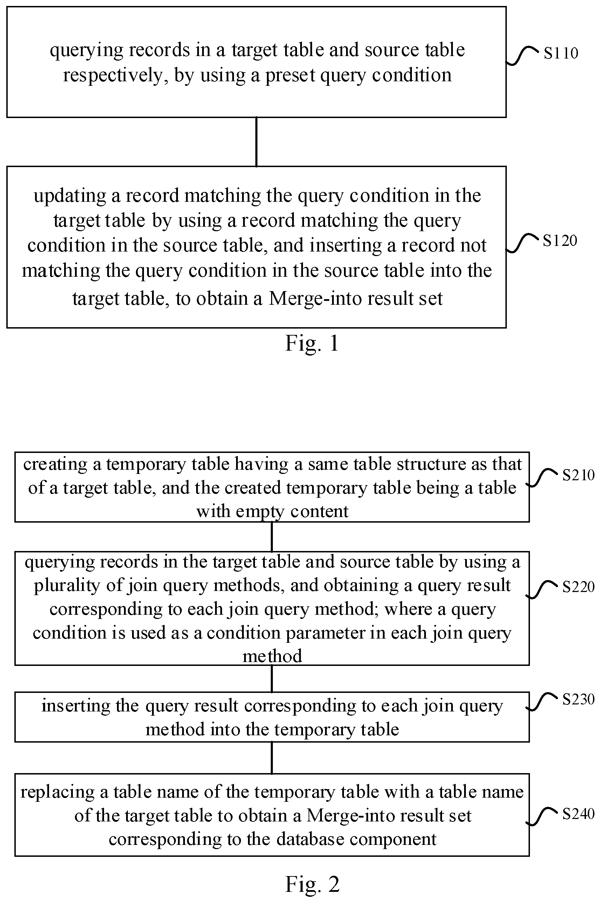

As shown in Fig. 1, it is a flowchart of a method, as known in the art and outside the scope of the present application, for enabling a database component to be compatible with a Merge-into function, when the database supports and updating operation. The method includes step S110 and step S120.

In step S110, records in a target table and a source table are queried respectively, by using a preset query condition.

In step S120, a record matching the query condition in the target table is updated by using a record matching the query condition in the source table, and a record not matching the query condition in the source table is inserted into the target table, to obtain a Merge-into result set corresponding to the database component.

For the database component that does not support the Merge-into function, the Merge-into function is decomposed into different operations, such as an updating operation and an inserting operation; and the decomposing operations are performed on the source table and the target table, so that the Merge-into function can be implemented in the database component equivalently, so as to enable the database component to support the Merge-into function, thereby overcoming the problem that related database component does not support the Merge-into function, and enhancing the ease of use and versatility of the database component.

For a database component that supports the inserting operation and the updating operation, the Merge-into function may be directly decomposed into the inserting operation and the updating operation. That is, a record in the target table is directly updated by using a record in the source table, and a record is inserted into the target table, to obtain the Merge-into result set, which specifically includes the following steps.

In step 1, the records in the target table and source table are respectively queried by using the query condition, and records in the target table and source table that match the query condition are respectively determined.

In step 2, if there is a record in the source table matches the query condition, and there is also a record in the target table matches the query condition, the record matching the query condition in the target table is updated by using the record matching the query condition in the source table.

In step 3, if there is a record in the source table does not match the query condition, the record not matching the query condition in the source table is inserted into the target table.

A target table which is updated and/or into which the record is inserted may be obtained, and the target table is the Merge-into result set corresponding to the database component.

According to the embodiment provided by the present disclosure, for a database component that supports the inserting operation and does not support the updating operation, the Merge-into function cannot be directly decomposed into the inserting operation and the updating operation, and a temporary table may be used to equivalently implement the inserting operation and the updating operation to obtain the Merge-into result set. The manner in which the Merge-into function is implemented through the temporary table will be described in detail below, and will not be repeated herein.

The method for enabling a database component to be compatible with a Merge-into function provided by the embodiment of the present disclosure can overcome the problem that database component does not support the Merge-into function and does not support the updating operation and enhance the ease of use and versatility of the database component.

In some application scenarios, the database component supports the inserting operation but does not support the updating operation. According to the embodiment provided by the present disclosure, how the database component that supports the inserting operation but does not support the updating operation is compatible with the Merge-into function will be described below. The database component that supports the inserting operation but does not support the updating operation may include, but is not limited to an HAWQ database component and/or an Impala database component.

According to the embodiment provided by the present disclosure, the target table is set as a table A, and the source table is set as a table B. In order to realize the Merge-into function, the temporary table may be used as a transit, a record that needs to be updated and a record that needs to be inserted into table A are inserted into the temporary table, an unupdated record in table A is also inserted into the temporary table, finally the table name of the temporary table is modified to the table name of table A, and then the Merge-into result set is obtained.

As shown in Fig. 2, it is another flowchart of a method for enabling a database component to be compatible with a Merge-into function. The method may include steps S210-S240.

In step S210, a temporary table having a same table structure as that of a target table is created, and the created temporary table is a table with empty content.

According to the embodiment provided by the present disclosure, the following sentence may be used to achieve the purpose of creating the temporary table (A_TMP) having the same table structure as table A: CREATE TABLE A AS SELECT * from A_TMP where 1<>1.

In step S220, records in the target table and source table are queried by using a plurality of join query methods, and a query result corresponding to each join query method is obtained. A query condition is used as a condition parameter in each join query method.

According to the embodiment provided by the present disclosure, the join query methods are: an inner join query, a left join query and a right join query.

The inner join query, left join query and right join query are performed on the tables A and B, and an inner join query result, left join query result and right join query result are obtained correspondingly. One or more inner join queries are used for the tables A and B, and an inner join query result corresponding to each inner join query is obtained.

In step S230, the query result corresponding to each join query method is inserted into the temporary table.

According to the embodiment provided by the present disclosure, the inner join query result corresponding to the inner join query, the left join query result corresponding to the left join query, and the right join query result corresponding to the right join query are inserted into the temporary table respectively. If a plurality of inner join query results are obtained, it is needed to insert the plurality of inner join query results into the temporary table.

According to the embodiment provided by the present disclosure, the query condition (Condition _Expressions) includes: a first query condition (Condition_1) and a second query condition (Condition_2). The first query condition is a query condition that is not for the table B; that is, the first query condition is a query condition that is only for table A, or is a query condition that is neither for table A nor table B. The second query condition is a query condition for both the tables A and B.

According to the embodiment provided by the present disclosure, since the query condition includes the first query condition and the second query condition, inner join , left join and inner join queries are performed on the tables A and B, and right join and inner join queries are performed on the tables A and B, three inner join query results, one left join query result and one right join query result are correspondingly obtained, and the three inner join query results, the one left join query result and the one right join query result are inserted into the temporary table respectively. The process includes the following steps.

In step 1, an inner join query is performed on the table A and the table B, and an inner join query result corresponding to the inner join query is inserted into the temporary table. This step includes: internally joining the tables A and B to obtain an intersection (i.e., a record that satisfies both the first query condition and the second query condition) of the tables A and B under the query condition; and inserting the updated record into the temporary table.

In step 2, left join and inner join queries are performed on tables A and B, and a left join query result and inner join query result corresponding to the left join and inner join queries are inserted into the temporary table. This step includes: left joining the tables A and B, and inserting a record in the table A that does not satisfy the second query condition into the temporary table; and internally joining the tables A and B, obtaining a record in the tables A and B that satisfies the second query condition and does not satisfy the first query condition, and inserting the obtained record in the table A into the temporary table.

In step 3, right join and inner join queries are performed on the tables A and B, and a right join query result corresponding to the right join query and an inner join query result corresponding to the inner join query are inserted into the temporary table. This step includes: right joining the tables A and B, and inserting a record in the table B that does not satisfy the second query condition into the temporary table; internally joining the tables A and B to obtain a record (i.e., an intersection) of the tables A and B that satisfies the second query condition and does not satisfy the first query condition; and inserting the updated record into the temporary table.

In step S240, a table name of the temporary table is replaced with a table name of the target table to obtain a Merge-into result set corresponding to the database component.

Table A is deleted, the table name of the temporary table is replaced with the table name of the table A, and the newly obtained table A is the Merge-into result set.

According to the embodiment provided by the present disclosure, the Merge-into function is realized by using an Inner Join, Left Join and Right Join, combined with the temporary table and the query condition. The code implementation of the Merge-into function may include the following steps.

In step 1, an Inner Join and a matching (i.e., Sql_Matched) operation equivalent to Merge-into are performed, through combining the Inner Join with a Table A, Table B and Condition_Expressions. The code implementation of replacing a matched field in the table A with a matched field in the table B and inserting the record whose field has been replaced into a table A_TMP is shown in Table 1.

**Table 1: The code implementation of the matching (i.e., Sql_Matched) operation equivalent to Merge-into.**

| | |
|---|---|
| insert into A_TMP | |
| | (select (Equivalent Sql_Matched) |
| | from (select * from A where Condition_1) C |
| | inner join Query_Sql B |
| | ON Condition_2 |
| | ); |

Condition_1 and Condition_2 in Table 1 are Condition_Expressions. Condition_1 is a query condition not for the table B, and Condition_2 is a query condition for both the tables A and B.

In step 2, an unmatched record in the table A is inserted into the table A_TMP, through combining a Left Join and Inner join with the Table A, Table B and Condition_Expressions. The code implementation of inserting a record not matching Condition_2 in the table A into the table A_TMP, obtaining record matching Condition_2 and not matching Condition_1 in the tables A and B, and inserting the obtained record in the table A into the table A_TMP, is shown in Table 2.

**Table 2: The code implementation of inserting the unmatched record in the table A into the table A_TMP through combining the Left Join and Inner join with the Table A, Table B and Condition_Expressions.**

| | |
|---|---|
| insert into A_TMP | |
| | (select (A FIELDS) |
| | from A |
| | inner join Query_Sql B |
| ON Condition_2 WHERE B.NOT_JOIN_FIELD is null | |
| | ); |
| insert into A_TMP | |
| | (select (C FIELDS) |
| | from (select * from A where NOT Condition_1) C |
| | inner join Query_Sql B |
| | ON Condition_2 |
| | ); |

B.NOT_JOIN_FIELD in Table 2 represents any one field in the table B that has not been matched (Join).

In step 3, a mismatching (i.e., Sql_Unmatched) operation equivalent to Merge-into is performed, through combining a Right Join and Inner Join with the Table A, Table B and Condition_Expressions. A record in table B that does not match Condition_2 is inserted into the table A_TMP; and records in tables A and B that match Condition_2 and do not match Condition_1 are obtained, the obtained record in the table A is updated according to the obtained record in the table B, and the updated record is inserted into the table A_TMP. The code implementation is shown in Table 3.

**Table 3: The code implementation of performing the mismatching (i.e., Sql_Unmatched) operation equivalent to Merge-into through combining the Right Join and Inner Join with the Table A, Table B and Condition_Expressions.**

| | |
|---|---|
| insert into A_TMP | |
| | (select (Equivalent Sql_Unmatched) |
| | from A |
| | right join Query_Sql B |
| | ON Condition_2 WHERE A.NOT_JOIN_FIELD is null |
| | ); |
| insert into A_TMP | |
| | (select (Equivalent Sql_Unmatched) |
| | from (select * from A where NOT Condition_1) C |
| | inner join Query_Sql B |
| | ON Condition_2 |
| | ); |

A.NOT_JOIN_FIELD in Table 3 represents any one unmatched field in the table A.

In step 4, the table A is deleted, the code implementation of which is as follows: drop table A.

In step 5, a table name of the table A_TMP is renamed to the table name of the table A, the code implementation of which is as follows: alter table A_TMP rename to A.

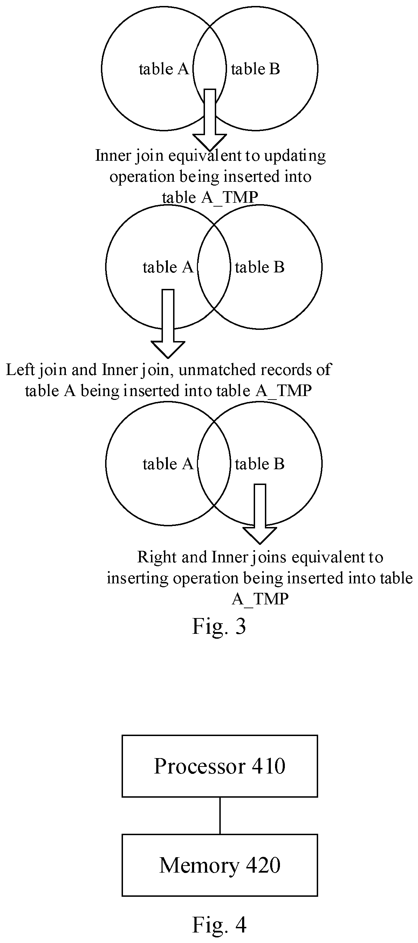

The above are detailed steps for the database component to be compatible with the Merge-into function. As shown in Fig. 3, it is a Venn diagram of Merge-into function conversion.

An empty table A_TMP (not shown in Fig. 3) having a table structure identical to that of the table A is created; the tables A and B are internally joined to obtain records of matched part of the tables A and B, a record of the matched part of the table A is updated with a record of the matched part of the table B, and the updated record is inserted into the table A_TMP (which is equivalent to an updating operation); record in the table A obtained through Left join and Inner join except for the above matched part is inserted into the table A_TMP (which is equivalent to remain unchanged); record in the table B obtained through Right join and Inner join except for the above matched part is inserted into the table A_TMP (which is equivalent to an inserting operation); and the table A_TMP is renamed to the table name of the table A, and the table A after an equivalent Merge-into operation is obtained.

The above implementation codes may be used as a Merge-into function conversion module provided in a kernel layer or application layer of a database component that does not support the Merge-into function, or may also be used as a separate plug-in, enabling the Merge-into function to be supported in the database component that does not support the Merge-into function.

The embodiment of the present disclosure provides a solution method for implementing support for the Merge-into function, for the database component that does not support the Merge-into syntax, and also does not support the updating function.

According to the method provided by the embodiment of the present disclosure, the Merge-into syntax function is split, an empty temporary table is created, then query results of Inner Join, Left Join and Right Join are inserted into the temporary table through Inner Join, Left Join and Right Join respectively, finally the temporary table is renamed to the table name of the target table, and the result completely equivalent to Merge-into is obtained. The compatibility method of Merge-into function provided by the embodiment of the present disclosure enables the database component that originally does not support the Merge-into function and updating operation to be able to support the Merge-into function.

According to the method provided by the embodiment of the present disclosure, based on Inner Join, Left Join and Right Join, filtered data is inserted into an initially empty temporary table, and a result set equivalent to Merge-into is finally obtained, which effectively and efficiently solves the problem that the database component cannot support the Merge-into function.

For a better understanding, a specific example is provided below to illustrate the method provided by the embodiment of the present disclosure.

For example, data in table b will be merged into table a, and the tables a and b are shown in Table 4 and Table 5 respectively.

**Table 4: table a.**

| table a | | | |
|---|---|---|---|
| id | name | year | country |
| 1 | Liuwei | 20 | China |
| 2 | Zhangpin | 21 | China |
| 3 | Fuguo | 20 | China |
| 5 | David | 26 | Usa |

**Table 5: table b.**

| table b | | | | |
|---|---|---|---|---|
| id | aid | name | year | city |
| 1 | 2 | Zhanglin | 30 | Jilin |
| 2 | 4 | Yihe | 33 | Heilongjiang |
| 3 | 3 | Fuguo | 24 | Shandong |

If a database component supports the Merge-into language, corresponding Merge-into sentences are shown in Table 6.

**Table 6: The code implementation of merging the data in table b into table a by using the Merge-into sentences.**

| |
|---|
| merge into a |
| using (select b.aid, b.name, b.year from b) c |
| on (a.country= 'china' and a.id=c.aid) |
| when matched then |
| update set a.year=c.year |
| when not matched then |
| insert (a.id, a.name, a.year, a.country) values (c.aid, c.name, c.year, 'china'); |

In Table 6, a record corresponding to "aid, name, year" in table b is filtered out as c; and a query condition "a.country= 'china' and a.id=c.aid" is used to match in table a and c, a data item "year" in table a is updated with a data item in c that matches the query condition, and records (i.e., id, name, year, and fixed value 'china') corresponding to data items in c that do not match the query condition are inserted into table a.

A first query condition Condition_1 is "a.country='china'", and a second query condition Condition_2 is "a.id=c.aid".

For the database component that does not support the Merge-into language, and does not support an updating operation, the following methods are needed to enable the database component to be compatible with the Merge-into function.

In step 1, a temporary table a_tmp is created, and the temporary table is an empty table. The code implementation of this step is: create table a_tmp as select * from a where 1<>1. The temporary table a_tmp is shown in Table 7.

**Table 7: Temporary table a_tmp in step 1.**

| Temporary table a_tmp | | | |
|---|---|---|---|
| id | name | year | country |
| | | | |
| | | | |

In step 2, an Inner Join operation is performed on tables a and b. The code implementation of this step is shown in Table 8.

**Table 8: The code implementation of performing the Inner Join operation on tables a and b.**

| |
|---|
| insert into a_tmp |
| (select |
| m.id, m.name, c.year, m.country |
| from (select * from a where a.country='china') m |
| inner join (select b.aid, b.name, b.year from b) c |
| on m.id=c.aid |
| ); |

In Table 8, a filter condition "a.country="china'" is used to filter records containing "china" in table a, and m is obtained; and the query condition "m.id=c.aid" is used to query m and table b, and a record where a data item "id" is equal to a data item "aid" in table b is found in m, and a record formed by combining "year" corresponding to "aid" and "id, name, country" corresponding to "id" in m is inserted into the temporary table a_tmp. At this time, the temporary table a_tmp is shown in Table 9.

**Table 9: Temporary table a_tmp in step 2.**

| Temporary table a_tmp | | | |
|---|---|---|---|
| id | name | year | country |
| 2 | Zhanglin | 30 | China |
| 3 | Fuguo | 24 | China |

In step 3, Left Join and Inner Join operations are performed on tables a and b. The code implementation of this step is shown in Table 10.

**Table 10: The code implementation of performing the Left Join and Inner Join operations on tables a and b.**

| |
|---|
| insert into a_tmp |
| (select |
| a.id, a.name, a.year, a.country |
| from a |
| left join ( select b.aid, b.name, b.year from b) c |
| on a.id=c.aid where c.name is null |
| ); |
| insert into a_tmp |
| (select |
| n.id, n.name, n.year, n.country |
| from (select * from a where a.country<>'china') n |
| inner join (select b.aid, b.name, b.year from b) c |
| on n.id=c.id |
| ); |

In Table 10, the second query condition "a.id=c.aid" combined with a Left Join is used to query the tables a and b, to find all records in the table a that do not satisfy the condition "a.id=c.aid", and a corresponding record of "id, name, year, country" among these records is inserted into the table a_tmp. A record not containing "china" is filtered out from the table a by using "a.country<>'china'" opposite to the first query condition, and n is obtained; n and the table b are queried by using the second query condition "n.id=c.aid", and a record where a data item "id" is equal to a data item "aid" in table b is found in n; and a corresponding record of "id, name, year, country" among these records is inserted into the table a_tmp. At this time, the temporary table a_tmp is shown in Table 11.

**Table 11: Temporary table a_tmp in step 3.**

| Temporary table a_tmp | | | |
|---|---|---|---|
| id | name | year | country |
| 2 | Zhanglin | 30 | China |
| 3 | Fuguo | 24 | China |
| 1 | Liuwei | 20 | China |
| 5 | David | 26 | Usa |

In step 4, Right Join and Inner Join operations are performed on tables a and b. The code implementation of this step is shown in Table 12.

**Table 12: The code implementation of performing the Right Join and Inner Join operations on tables a and b.**

| |
|---|
| insert into a_tmp |
| (select |
| c.aid, c.name, c.year, 'china' |
| from a |
| right join (select b.aid, b.name, b.year from b) c |
| on a.id=c.aid where a.name is null |
| ); |
| insert into a_tmp |
| (select |
| c.aid, c.name, c.year, 'china' |
| from (select * from a where a.country<>'china') n |
| inner join (select b.aid, b.name, b.year from b) c |
| on n.id=c.id |
| ); |

In Table 12, the second query condition "a.id=c.aid" combined with a Right Join is used to query the tables a and b, to find all records in table b that do not satisfy the condition "a.id=c.aid", and a record formed by combining corresponding "id, name, year" and "country" with a fixed value of "china" among these records is inserted into the table a_tmp. A record not containing "china" is filtered out from the table a by using "a.country<>'china"' opposite to the first query condition, and n is obtained; n and the table b are queried by using the second query condition "n.id=c.aid", and a record where a data item "aid" is equal to a data item "id" in table a is found in the table b; and the record formed by combining corresponding "id, name, year" and "country" with the fixed value of "china" among these records in the table b is inserted into the table a_tmp. At this time, the temporary table a_tmp is shown in Table 13.

**Table 13: Temporary table a_tmp in step 4.**

| Temporary table a_tmp | | | |
|---|---|---|---|
| id | name | year | country |
| 2 | Zhanglin | 30 | China |
| 3 | Fuguo | 24 | China |
| 1 | Liuwei | 20 | China |
| 5 | David | 26 | Usa |
| 4 | Yihe | 30 | China |

In step 5, the table name of the temporary table a_tmp is renamed to the table name of the table a. The code implementation of this step is shown in Table 14. At this time, the obtained table as shown in Table 15 is a result set of the equivalent Merge-into.

**Table 14: The code implementation of changing the table name of the temporary table a_tmp to the table name of table a.**

| |
|---|
| drop table a; |
| alter table a_tmp rename to a; |

**Table 15: Table a in step 5.**

| Table a | | | |
|---|---|---|---|
| id | name | year | country |
| 2 | Zhanglin | 30 | China |
| 3 | Fuguo | 24 | China |
| 1 | Liuwei | 20 | China |
| 5 | David | 26 | Usa |
| 4 | Yihe | 30 | China |

Based on the Inner Join, Left Join and Right Join, the method for enabling a database component to be compatible with a Merge-into function provided by the embodiment of the present disclosure solves the problem and defect that database component does not support the Merge-into function and does not support the updating operation, and effectively enhances the ease of use and versatility of such database component.

The embodiment of the present disclosure also provides a device for enabling a database component to be compatible with a Merge-into function. As shown in Fig. 4, it is a schematic structural diagram of a device for enabling a database component to be compatible with a Merge-into function. The device for enabling the database component to be compatible with the Merge-into function includes but is not limited to: a processor 410 and a memory 420.

The processor 410 is configured to execute a program for enabling a database component to be compatible with a Merge-into function stored in the memory 420 to implement the steps of the method for enabling the database component to be compatible with the Merge-into function provided by the embodiment of the present disclosure: querying records in a target table and source table respectively, by using a preset query condition; and updating a record matching the query condition in the target table by using a record matching the query condition in the source table, and inserting a record not matching the query condition in the source table into the target table, to obtain a Merge-into result set.

According to the embodiment provided by the present disclosure, the processor 410 is specifically configured to realize querying the records in the target table and source table respectively by using the preset query condition in the following manner: querying the records in the target table and source table respectively by using a plurality of join query methods, and obtaining a query result corresponding to each join query method of the plurality of join query methods. The query condition is used as a condition parameter in the join query method.

According to the embodiment provided by the present disclosure, the processor 410 is specifically configured to realize updating the record matching the query condition in the target table without using an updating operation by using the record matching the query condition in the source table, and inserting the record not matching the query condition in the source table into the target table to obtain the Merge-into result set in the following manner: inserting the query result corresponding to the join query method into a temporary table, where the temporary table has a same table structure as that of the target table; and replacing a table name of the temporary table with a table name of the target table, to obtain the Merge-into result set.

According to the embodiment provided by the present disclosure, the processor 410 is specifically configured to realize querying the records in the target table and source table respectively by using the plurality of join query methods, and obtaining the query result corresponding to the join query method of the plurality of join query methods in the following manner: performing an inner join query, left join query and right join query on the target table and the source table, and obtaining an inner join query result, left join query result and right join query result correspondingly.

The embodiment of the present disclosure further provides a storage medium (i.e., a computer-readable storage medium). The storage medium herein stores one or more programs. The storage medium may include a volatile memory, such as a random access memory; the memory may also include a non-volatile memory, such as a read-only memory, a flash memory, a hard disk, or a solid-state hard disk; and the memory may also include a combination of the above-mentioned types of memory.

The one or more programs in the storage medium are executed by one or more processors, to implement the steps of the method for enabling the database component to be compatible with the Merge-into function provided by the embodiment of the present disclosure.

The processor is configured to execute the program for enabling the database component to be compatible with the Merge-into function stored in the memory to implement the steps of the method for enabling the database component to be compatible with the Merge-into function: querying records in a target table and source table respectively, by using a preset query condition; and updating a record matching the query condition in the target table by using a record matching the query condition in the source table, and inserting a record not matching the query condition in the source table into the target table, to obtain a Merge-into result set.

It should be understood by those having ordinary skill in the art that all or some of the steps in the method, systems, and the functional modules/units in devices disclosed above may be implemented as software, firmware, hardware, or suitable combinations thereof. In the hardware embodiments, the division among the functional modules/units mentioned in the above description does not necessarily correspond to the division of the physical components; for example, one physical component may have multiple functions, or one function or step may be performed jointly by several physical components. Some or all components may be implemented as the software executed by the processor such as CPU, digital signal processor or microprocessor, or may be implemented as the hardware, or implemented as the integrated circuit such as application specific integrated circuit. Such softwares may be distributed over the computer-readable media which may include the computer storage medium (or non-transient medium) and the communication medium (or transient medium). As can be well known by those having ordinary skill in the art, the term "computer storage medium" includes the volatile, non-volatile, removable and unremovable media implemented in any method or technique for storing the information (such as computer-readable instructions, data structures, program modules, or other data). The computer storage medium includes but not limited to Random Access Memory (RAM), Read-Only Memory (ROM), Electrically Erasable Programmable Read-Only Memory (EEPROM), flash or other memory technology, Compact Disc Read-Only Memory (CD-ROM), Digital Versatile Disc (DVD) or other optical disc storage, magnetic box, magnetic tape, magnetic disk storage or other magnetic storage device, or any other medium which can be used to store the desired information and can be accessed by a computer. Furthermore, it is well known by those having ordinary skill in the art that the communication medium generally contains the computer-readable instructions, data structures, program modules, or other data in the modulated data signal such as carrier or other transmission mechanism, and may include any information delivery medium.

## Claims

1. A computer-implemented method for enabling a database component which does not support a Merge-into function and does not support an updating operation to be compatible with the Merge-into function, comprising:
querying (S110) records in a target table and source table respectively, by using a preset query condition; and
updating (S120) a record matching the query condition in the target table by using a record matching the query condition in the source table, and inserting a record not matching the query condition in the source table into the target table, to obtain a Merge-into result set,
wherein the present query condition comprises a first query condition that is not for the source table and a second query condition that is for the target table and the source table,
wherein querying (S110) the records in the target table and the source table respectively, by using a preset query condition comprises:
performing an inner join query on the target table and the source table, performing left join and inner join queries on the target table and the source table, and performing right join and inner join queries on the target table and the source table, by using the first query conditon and the second query conditon, to obtain three inner join query results, one left join query result and one right join query result, and
wherein updating (S120) the record matching the query condition in the target table by using the record matching the query condition in the source table, and inserting the record not matching the query condition in the source table into the target table, to obtain the Merge-into result set comprises:
inserting the three inner join query results, the one left join query result and the one right join query result in a temporary table respectively, and replacing a table name of the temporary table with a table name of the target table, to obtain the Merge-into result set.

2. The method according to claim 1, wherein the temporary table has a same table structure as that of the target table.

3. A device for enabling a database component which does not support a Merge-into function and does not support an updating operation to be compatible with the Merge-into function, comprising: a memory (420), a processor (410), and a computer program stored on the memory (420) and executable by the processor (410), wherein when the computer program is executed by the processor (410), the following steps are implemented:
querying records in a target table and source table respectively, by using a preset query condition; and
updating a record matching the query condition in the target table by using a record matching the query condition in the source table and inserting a record not matching the query condition in the source table into the target table, to obtain a Merge-into result set,
wherein the present query condition comprises a first query condition that is not for the source table and a second query condition that is for the target table and the source table,
wherein querying the records in the target table and the source table respectively, by using a preset query condition comprises:
performing an inner join query on the target table and the source table, performing left join and inner join queries on the target table and the source table, and performing right join and inner join queries on the target table and the source table, by using the first query conditon and the second query conditon, to obtain three inner join query results, one left join query result and one right join query result, and
wherein updating (S120) the record matching the query condition in the target table by using the record matching the query condition in the source table, and inserting the record not matching the query condition in the source table into the target table, to obtain the Merge-into result set comprises:
inserting the three inner join query results, the one left join query result and the one right join query result in a temporary table respectively, and replacing a table name of the temporary table with a table name of the target table, to obtain the Merge-into result set.

4. The device according to claim 3, wherein the temporary table has a same table structure as that of the target table.

5. A computer-readable storage medium storing a program for enabling a database component which does not support a Merge-into function and does not support an updating operation to be compatible with the Merge-into function, wherein when the program for enabling the database component which does not support the Merge-into function and does not support an updating operation to be compatible with the Merge-into function is executed by a processor, the method for enabling the database component which does not support the Merge-into function and does not support an updating operation to be compatible with the Merge-into function according to any one of claims 1-2 is implemented.

## Patentansprüche

1. Computerimplementiertes Verfahren zum Aktivieren einer Datenbankkomponente, die keine Merge-Into-Funktion unterstützt und keinen Aktualisierungsvorgang unterstützt, um mit der Merge-into-Funktion kompatibel zu sein, umfassend:
Abfragen (S110) von Aufzeichnungen in einer Zieltabelle bzw. einer Quelltabelle durch Verwenden einer voreingestellten Abfragebedingung; und
Aktualisieren (S120) einer Aufzeichnung, die mit der Abfragebedingung in der Zieltabelle übereinstimmt, durch Verwenden einer Aufzeichnung, die mit der Abfragebedingung in der Quelltabelle übereinstimmt, und Einfügen einer Aufzeichnung, die nicht mit der Abfragebedingung in der Quelltabelle übereinstimmt, in die Zieltabelle, um einen Merge-into-Ergebnissatz zu erhalten,
wobei die vorliegende Abfragebedingung eine erste Abfragebedingung, die nicht für die Quelltabelle ist, und eine zweite Abfragebedingung, die für die Zieltabelle und die Quelltabelle ist, umfasst,
wobei das Abfragen (S110) der Aufzeichnungen in der Zieltabelle bzw. der Quelltabelle durch Verwenden einer voreingestellten Abfragebedingung umfasst:
Durchführen einer inneren Beitrittsanfrage an der Zieltabelle und der Quelltabelle, Durchführen von Linksbeitritts- und inneren Beitrittsanfragen an der Zieltabelle und der Quelltabelle und Durchführen von Rechtsbeitritts- und inneren Beitrittsanfragen an der Zieltabelle und der Quelltabelle durch Verwenden der ersten Abfragebedingung und der zweiten Abfragebedingung, um drei innere Beitrittsabfrageergebnisse, ein Linksbeitrittsabfrageergebnis und ein Rechtsbeitrittsabfrageergebnis zu erhalten, und
wobei das Aktualisieren (S120) der Aufzeichnung, die mit der Abfragebedingung in der Zieltabelle übereinstimmt, durch Verwenden der Aufzeichnung, die mit der Abfragebedingung in der Quelltabelle übereinstimmt, und Einfügen der Aufzeichnung, die nicht mit der Abfragebedingung in der Quelltabelle übereinstimmt, in die Zieltabelle, um den Merge-into-Ergebnissatz zu erhalten, umfasst:
Einfügen der drei inneren Beitrittsabfrageergebnisse, des einen Linksbeitrittsabfrageergebnisses bzw. des einen Rechtsbeitrittsabfrageergebnisses in eine temporäre Tabelle und Ersetzen eines Tabellennamens der temporären Tabelle durch einen Tabellennamen der Zieltabelle, um den Merge-into-Ergebnissatz zu erhalten.

2. Verfahren nach Anspruch 1, wobei die temporäre Tabelle eine gleiche Tabellenstruktur wie die der Zieltabelle aufweist.

3. Vorrichtung zum Aktivieren einer Datenbankkomponente, die keine Merge-into-Funktion unterstützt und keinen Aktualisierungsvorgang unterstützt, um mit der Merge-into-Funktion kompatibel zu sein, umfassend: einen Speicher (420), einen Prozessor (410) und ein Computerprogramm, das auf dem Speicher (420) gespeichert ist und durch den Prozessor (410) ausführbar ist, wobei, wenn das Computerprogramm durch den Prozessor (410) ausgeführt wird, die folgenden Schritte implementiert werden:
Abfragen von Aufzeichnungen in einer Zieltabelle bzw. einer Quelltabelle durch Verwenden einer voreingestellten Abfragebedingung; und
Aktualisieren einer Aufzeichnung, die mit der Abfragebedingung in der Zieltabelle übereinstimmt, durch Verwenden einer Aufzeichnung, die mit der Abfragebedingung in der Quelltabelle übereinstimmt, und Einfügen einer Aufzeichnung, die nicht mit der Abfragebedingung in der Quelltabelle übereinstimmt, in die Zieltabelle, um einen Merge-into-Ergebnissatz zu erhalten,
wobei die vorliegende Abfragebedingung eine erste Abfragebedingung, die nicht für die Quelltabelle ist, und eine zweite Abfragebedingung, die für die Zieltabelle und die Quelltabelle ist, umfasst,
wobei das Abfragen der Aufzeichnungen in der Zieltabelle bzw. der Quelltabelle durch Verwenden einer voreingestellten Abfragebedingung umfasst:
Durchführen einer inneren Beitrittsanfrage an der Zieltabelle und der Quelltabelle, Durchführen von Linksbeitritts- und inneren Beitrittsanfragen an der Zieltabelle und der Quelltabelle und Durchführen von Rechtsbeitritts- und inneren Beitrittsanfragen an der Zieltabelle und der Quelltabelle durch Verwenden der ersten Abfragebedingung und der zweiten Abfragebedingung, um drei innere Beitrittsabfrageergebnisse, ein Linksbeitrittsabfrageergebnis und ein Rechtsbeitrittsabfrageergebnis zu erhalten, und
wobei das Aktualisieren (S120) der Aufzeichnung, die mit der Abfragebedingung in der Zieltabelle übereinstimmt, durch Verwenden der Aufzeichnung, die mit der Abfragebedingung in der Quelltabelle übereinstimmt, und Einfügen der Aufzeichnung, die nicht mit der Abfragebedingung in der Quelltabelle übereinstimmt, in die Zieltabelle, um den Merge-into-Ergebnissatz zu erhalten, umfasst:
Einfügen der drei inneren Beitrittsabfrageergebnisse, des einen Linksbeitrittsabfrageergebnisses bzw. des einen Rechtsbeitrittsabfrageergebnisses in jeweils eine temporäre Tabelle und Ersetzen eines Tabellennamens der temporären Tabelle durch einen Tabellennamen der Zieltabelle, um den Merge-into-Ergebnissatz zu erhalten.

4. Vorrichtung nach Anspruch 3, wobei die temporäre Tabelle eine gleiche Tabellenstruktur wie die der Zieltabelle aufweist.

5. Computerlesbares Speichermedium zum Speichern eines Programms zum Aktivieren einer Datenbankkomponente, die keine Merge-into-Funktion unterstützt und keinen Aktualisierungsvorgang unterstützt, um mit der Merge-into-Funktion kompatibel zu sein, wobei, wenn das Programm zum Aktivieren der Datenbankkomponente, die keine Merge-into-Funktion unterstützt und keinen Aktualisierungsvorgang unterstützt, um mit der Merge-into-Funktion kompatibel zu sein, durch einen Prozessor ausgeführt wird, das Verfahren zum Aktivieren der Datenbankkomponente, die keine Merge-into-Funktion unterstützt und keinen Aktualisierungsvorgang unterstützt, um mit der Merge-into-Funktion kompatibel zu sein, nach einem der Ansprüche 1-2 implementiert wird.

## Revendications

1. Procédé mis en œuvre par ordinateur pour activer un composant de base de données qui ne prend pas en charge une fonction de fusion et ne prend pas en charge une opération de mise à jour pour qu'il soit compatible avec la fonction de fusion, comprenant les étapes consistant à :
interroger (S110) des enregistrements dans une table cible et une table source respectivement, en utilisant une condition d'interrogation prédéfinie ; et
mettre à jour (S120) un enregistrement correspondant à la condition d'interrogation dans la table cible en utilisant un enregistrement correspondant à la condition d'interrogation dans la table source, et insérer un enregistrement ne correspondant pas à la condition d'interrogation dans la table source dans la table cible, pour obtenir un ensemble de résultats de fusion,
dans lequel la présente condition d'interrogation comprend une première condition d'interrogation qui n'est pas pour la table source et une seconde condition d'interrogation qui est pour la table cible et la table source,
dans lequel interroger (S110) les enregistrements dans la table cible et la table source respectivement, en utilisant une condition d'interrogation prédéfinie comprend les étapes consistant à :
réaliser une interrogation de joindre interne sur la table cible et la table source, réaliser des interrogations de joindre gauche et de joindre interne sur la table cible et la table source, et réaliser des interrogations de joindre droite et de joindre interne sur la table cible et la table source, en utilisant la première condition d'interrogation et la seconde condition d'interrogation, pour obtenir trois résultats d'interrogation de joindre interne, un résultat d'interrogation de joindre gauche et un résultat d'interrogation de joindre droite, et
dans lequel mettre à jour (S120) l'enregistrement correspondant à la condition d'interrogation dans la table cible en utilisant l'enregistrement correspondant à la condition d'interrogation dans la table source, et insérer l'enregistrement ne correspondant pas à la condition d'interrogation dans la table source dans la table cible, pour obtenir l'ensemble de résultats de fusion comprend les étapes consistant à :
insérer les trois résultats d'interrogation de joindre interne, le résultat d'interrogation de joindre gauche et le résultat d'interrogation de joindre droite dans une table temporaire respectivement, et remplacer un nom de table de la table temporaire par un nom de table de la table cible, pour obtenir l'ensemble de résultats de fusion.

2. Procédé selon la revendication 1, dans lequel la table temporaire a une même structure de table que celle de la table cible.

3. Dispositif pour activer un composant de base de données qui ne prend pas en charge une fonction de fusion et ne prend pas en charge une opération de mise à jour pour qu'il soit compatible avec la fonction de fusion, comprenant : une mémoire (420), un processeur (410), et un programme informatique stocké sur la mémoire (420) et exécutable par le processeur (410), dans lequel lorsque le programme informatique est exécuté par le processeur (410), les étapes suivantes sont mises en œuvre :
interroger des enregistrements dans une table cible et une table source respectivement, en utilisant une condition d'interrogation prédéfinie ; et
mettre à jour un enregistrement correspondant à la condition d'interrogation dans la table cible en utilisant un enregistrement correspondant à la condition d'interrogation dans la table source et insérer un enregistrement ne correspondant pas à la condition d'interrogation dans la table source dans la table cible, pour obtenir un ensemble de résultats de fusion,
dans lequel la présente condition d'interrogation comprend une première condition d'interrogation qui n'est pas pour la table source et une seconde condition d'interrogation qui est pour la table cible et la table source,
dans lequel interroger les enregistrements dans la table cible et la table source respectivement, en utilisant une condition d'interrogation prédéfinie comprend les étapes consistant à :
réaliser une interrogation de joindre interne sur la table cible et la table source, réaliser des interrogations de joindre gauche et de joindre interne sur la table cible et la table source, et réaliser des interrogations de joindre droite et de joindre interne sur la table cible et la table source, en utilisant la première condition d'interrogation et la seconde condition d'interrogation, pour obtenir trois résultats d'interrogation de joindre interne, un résultat d'interrogation de joindre gauche et un résultat d'interrogation de joindre droite, et
dans lequel mettre à jour (S120) l'enregistrement correspondant à la condition d'interrogation dans la table cible en utilisant l'enregistrement correspondant à la condition d'interrogation dans la table source, et insérer l'enregistrement ne correspondant pas à la condition d'interrogation dans la table source dans la table cible, pour obtenir l'ensemble de résultats de fusion comprend les étapes consistant à :
insérer les trois résultats d'interrogation de joindre interne, le résultat d'interrogation de joindre gauche et le résultat d'interrogation de joindre droite dans une table temporaire respectivement, et remplacer un nom de table de la table temporaire par un nom de table de la table cible, pour obtenir l'ensemble de résultats de fusion.

4. Dispositif selon la revendication 3, dans lequel la table temporaire a une même structure de table que celle de la table cible.

5. Moyen de stockage lisible par ordinateur stockant un programme pour activer un composant de base de données qui ne prend pas en charge une fonction de fusion et ne prend pas en charge une opération de mise à jour pour qu'il soit compatible avec la fonction de fusion, dans lequel lorsque le programme pour activer le composant de base de données qui ne prend pas en charge la fonction de fusion et ne prend pas en charge une opération de mise à jour pour qu'il soit compatible avec la fonction de fusion est exécuté par un processeur, le procédé pour activer le composant de base de données qui ne prend pas en charge la fonction de fusion et ne prend pas en charge une opération de mise à jour pour qu'il soit compatible avec la fonction de fusion selon l'une quelconque des revendications 1 à 2 est mis en œuvre.
